# EUROPEAN PATENT SPECIFICATION

(11) **EP 1 801 362 B1**
(45) Date of publication and mention of the grant of the patent: **03.04.2013**
(21) Application number: 06126965.0
(22) Date of filing: 22.12.2006
(51) Int. Cl.: F01D 25/28, F01N 13/18, F01N 13/10, F02B 37/02

(54) **Turbosupercharger support and procedure for mounting a turbosupercharger support**
Turboladerhalterung sowie Verfahren zur deren Montage
Support de turbocompresseur et procédé de son montage

(30) Priority: 22.12.2005 IT MI20052445
(43) Date of publication of application: 27.06.2007
(73) Proprietor: FPT Industrial S.p.A., 10156 Torino (IT)
(72) Inventor: CASADEI, Michelangelo, 10025, PINO TORINESE (IT); ARCARI, Adriana, 10015, IVREA (IT)
(74) Representative: Borsano, Corrado

(56) References cited:
- EP-A- 1 431 537
- WO-A-02/088527
- FR-A- 2 849 469
- FR-A- 2 849 470
- FR-A- 2 870 886

## Description

The present invention refers to a turbosupercharger support with one or more nonstructural exhaust manifolds for an engine.

In certain engines, the-turbosupercharger is supported by the terminal, protruding part of the exhaust manifold. Therefore, the exhaust manifold, in addition to the exhaust gas conveyance function, also performs a structural turbosupercharger support function.

The problem of the structural criticality of the turbosupercharger support arises, due to the presence of high vibrations that have repercussions on the exhaust manifold, which simultaneously reaches high temperatures. This situation maylead to manifold damage, thus causing problems in terms of reliability and life.

FR-A-2 849 470 discloses an engine comprising a turbosupercharger and a bracket, this latter being mounted for stiffening the manifold feeding the exhaust gases within said turbosupercharger.

The purpose of the present invention is therefore to overcome the abovementioned drawbacks by providing a turbosupercharger support coupled to one or more nonstructural exhaust manifolds for an engine, so that the exhaust manifolds are only left with the exhaust gas conveyance function, separating that of turbosupercharger support.

The subject of the present invention is the engine of claim 1.

The subject of the present invention also covers a turbosupercharger support mounting procedure, according to claim 5.

Further purposes and advantages of the present invention will be evident in view of the detailed description of one embodiment thereof and the appended drawings givenbywayofanon-limiting example, wherein.
figures 1, 2 and 3 illustrate side, front and section plane views respectively of the components of the turbosupercharger support within the scope of the present invention;
figures 4 and 5 illustrate front and side views respectively of the turbosupercharger support mounted on an engine.

The same reference numbers and letters in the figures identify the same components.

According to the general aspects of the present invention, a bracket is introduced fastened rigidly to the engine, to which the terminal of the exhaust manifolds is connected, and that supports the turbosupercharger.

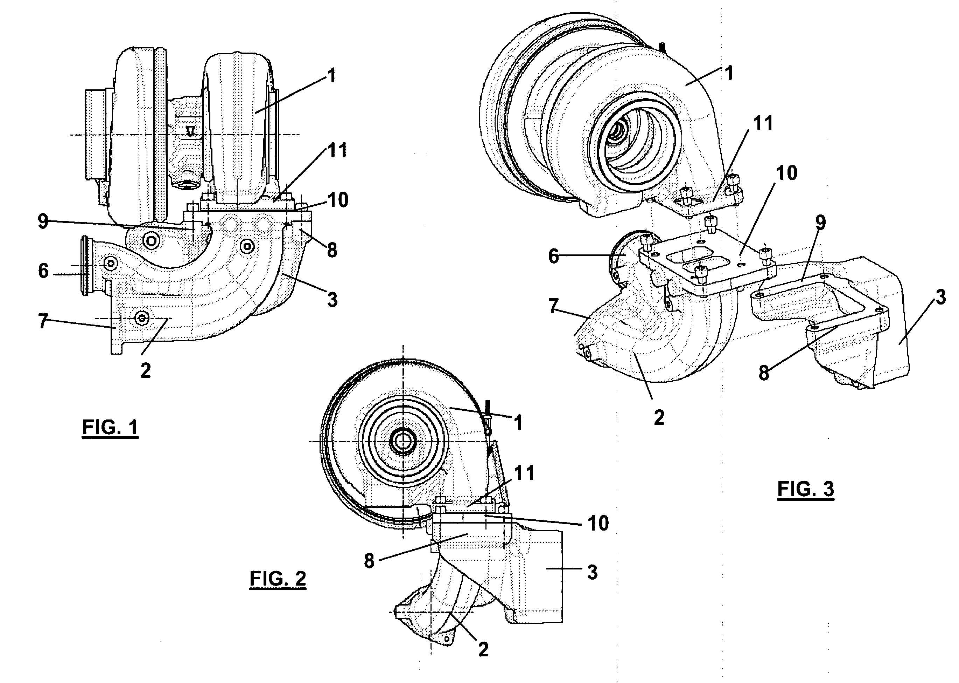

In figures 1, 2 and 3, the turbosupercharger 1, the exhaust manifold terminal 2 and the bracket 3 are shown.

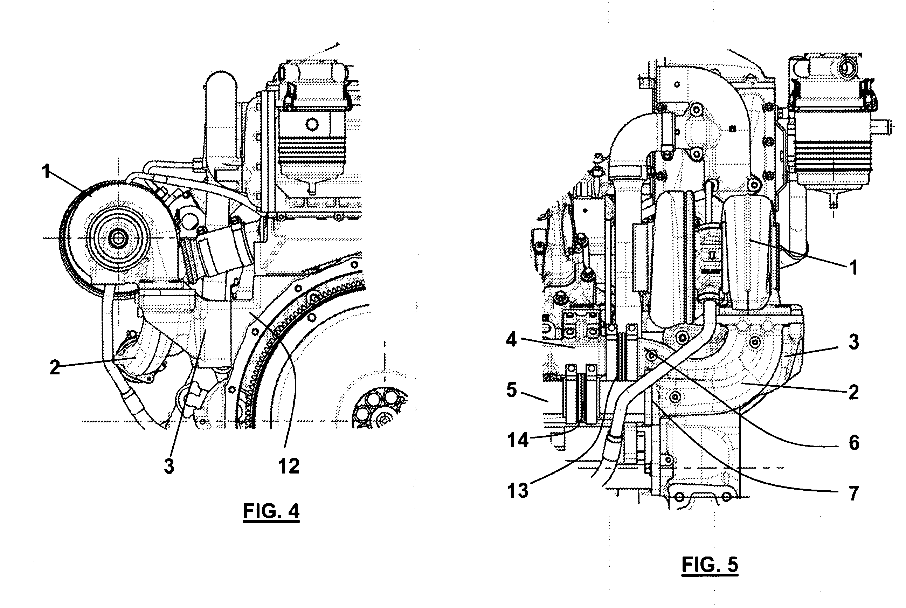

The number of exhaust manifolds depends on the type of engine. In the example in the figures there are two manifolds 4 and 5 (figs. 4 and 5) and therefore the terminal 2 divides into two pipes 6 and 7 towards the manifolds.

The bracket 3 has an open protruding configuration with two side wings 8 and 9, so that the terminal 2 can be slid between the two wings.

The terminal 2 presents a flange 10 that is fixed above the wings 8 and 9 of the bracket. The flange 10 is fixed to the corresponding flange 11 of the turbosupercharger 1, for example by screws with a seal in between (not shown in figures).

In this way, the bracket 3 advantageously remains outside the exhaust gas conveyance circuit and is exposed to less high temperatures; it can therefore be made of a less expensive material, for example grey iron. Furthermore, one avoids the need to place a seal between the bracket 3 and the flange 10.

Figures 4 and 5 show that the bracket 3 is rigidly fastened to a suitable point of the engine, for example to the flywheel housing 12.

Thanks to the presence of the bracket 3, the pipes 6 and 7 of the terminal 2 can be connected to the exhaust manifolds 4 and 5 by elastic bellows 13 and 14, which structurally uncouple the terminal 2 from the manifolds, thus improving the turbosupercharger's resistance to vibrations.

In mounting, the bracket 3 is first fastened to the engine. Then the exhaust manifold terminal (2) is fastened on one side to the manifolds 4 and 5 and on the other to the bracket by sliding it between the two wings 8 and 9, so that the flange 10 is positioned above the wings. One then fastens the turbosupercharger 1 on the terminal 2 with seal.

Those skilled in the art will be able to make variants to the non-limiting example described, all of which being contemplated within the scope of protection of this invention.

For example, the number of manifolds may vary according to the type of engine and moreover more than one turbosupercharger may be present, each one supported in accordance with the present invention.

The advantages deriving from the application of the present invention, as described above, are evident. The structural criticality of the turbosupercharger support in the prior art is substantially overcome, by separating the exhaust gas conveyance and turbosupercharger support functions.

Using the description given above, those skilled in the art are able to realise the object of the invention, without introducing further construction details.

## Claims

1. Engine comprising a turbosupercharger (1) and a turbosupercharger support, said engine comprising one or more exhaust manifolds (4,5) for exhaust gases exiting said turbosupercharger, wherein said support comprises a bracket (3) rigidly fastened to said engine and to a common terminal (2) of said exhaust manifolds (4,5), so that said bracket is outside the exhaust gas conveyance circuit carried by said manifolds, and wherein said turbosupercharger is fastened directly to said common terminal (2),
**characterised in that** said bracket (3) has an open protruding configuration with two side wings (8, 9), so that said common terminal (2) can be slid between the two side wings.

2. Engine according to claim 1, **characterised in that** said common terminal (2) comprises a first flange (10) suited to being fastened above the wings 8 and 9 of the bracket.

3. Engine according to claim 2, **characterised in that** said turbosupercharger (1) comprises a second flange (11) suited to being fastened to said first flange (10).

4. Engine according to claim 1, **characterised in that** said common terminal (2) comprises pipes (6, 7) suited to being connected to one of more exhaust manifolds (4, 5) by means of elastic bellows (13, 14).

5. Procedure for mounting a turbosupercharger support with one or more nonstructural exhaust manifolds (4, 5) for an engine, in accordance with any one of the previous claims, **characterised in that** it comprises the following steps in sequence:
- fastening of said bracket (3) to the engine;
- fastening of said common terminal (2) on one side to said manifolds (4,5) and on the other to said bracket by sliding it between the two side wings (8, 9), so that the first flange (10) is positioned above said side wings;
- fastening of said turbosupercharger (1) on said common terminal (2), directly collecting said first and second flange with a seal.

## Patentansprüche

1. Motor mit einem Abgasturbolader (1) und einer Abgasturboladeraufnahme, wobei der Motor einen oder mehrere Abgaskrümmer (4, 5) für den Auslaß von Abgasen aus dem Abgasturbolader aufweist, wobei die Aufnahme eine (3) Klammer aufweist, die steif mit dem Motor und mit einem gemeinsamen Anschlußelement (2) der Abgaskrümmer (4, 5) verbunden ist, so dass die Klammer außerhalb des Abgasförderkanals ist, welcher durch die beiden Abgaskrümmer getragen wird, und wobei der Abgasturbolader direkt an dem gemeinsamen Anschlusselement befestigt ist, **dadurch gekennzeichnet,**
**dass** die Klammer (3) eine offene vorspringende Bauform zeigt, mit zwei Seitenflügeln (8, 9) derart, dass das gemeinsame Anschlusselement (2) zwischen die beiden Seitenflügel eingeschoben werden kann.

2. Motor nach Anspruch 1, **dadurch gekennzeichnet, dass** das gemeinsame Anschlußelement (2) einen ersten Flansch (10) aufweist, der geeignet ist, oberhalb der Flügel (8, 9) der Klammer (3) befestigt zu werden.

3. Motor nach Anspruch 2, **dadurch gekennzeichnet, dass** der Abgasturbolader (1) einen zweiten Flansch (11) aufweist, der geeignet ist, an dem ersten Flansch befestigt zu werden.

4. Motor nach Anspruch 1, **dadurch gekennzeichnet, dass** das gemeinsame Anschlußelemente (2) Rohre (6, 7) aufweist, die geeignet sind, an einen oder mehrere Abgaskrümmer (4, 5) mittels Bälgen (13, 14) befestigt zu werden.

5. Verfahren zum Montieren einer Abgasturboladeraufnahme mit einem oder mehreren nicht tragenden Abgaskrümmern (4, 5) eines Motors gemäß einem der vorigen Ansprüche, **dadurch gekennzeichnet, dass** das Verfahren die folgenden Schritte in aufeinanderfolgender Reihenfolge aufweist:
- Befestigen der Klammer (3) an Motor;
- Befestigen einer Seite des gemeinsamen Anschlußelementes (2) an den Abgaskrümmer (4, 5) und der anderen Seite an die Klammer durch Einschieben des gemeinsamen Anschlußelementes zwischen die beiden Seitenflügel (8, 9), so dass der erste Flansch (10) oberhalb der Seitenflügel angeordnet ist;
- Befestigen des Abgasturboladers (1) an dem gemeinsamen Element (2), wobei der erste und der zweite Flansch direkt über eine Dichtung verbunden werden.

## Revendications

1. Moteur comprenant un turbocompresseur (1) et un support de turbocompresseur, ledit moteur comprenant une ou plusieurs tubulures d'échappement (4, 5) pour les gaz d'échappement sortant dudit turbocompresseur, dans lequel ledit support comprend une console (3) fixée rigidement audit moteur et à une borne commune (2) desdites tubulures d'échappement (4, 5), de sorte que ladite console soit extérieure au circuit d'acheminement des gaz d'échappement porté par lesdites tubulures, et dans lequel ledit turbocompresseur est fixé directement à ladite borne commune (2), **caractérisé en ce que** ladite console (3) a une configuration en saillie ouverte avec deux ailes latérales (8, 9), de sorte que ladite borne commune (2) puisse être coulissée entre les deux ailes latérales.

2. Moteur selon la revendication 1, **caractérisé en ce que** ladite borne commune (2) comprend une première bride (10) appropriée pour être fixée au-dessus des ailes 8 et 9 de la console.

3. Moteur selon la revendication 2, **caractérisé en ce que** ledit turbocompresseur (1) comprend une seconde bride (11) appropriée pour être fixée à ladite première bride (10).

4. Moteur selon la revendication 1, **caractérisé en ce que** ladite borne commune (2) comprend des tuyaux (6, 7) appropriés pour être raccordés à une ou plusieurs tubulures d'échappement (4, 5) au moyen d'un soufflet élastique (13, 14).

5. Procédure de montage d'un support de turbocompresseur avec une ou plusieurs tubulures d'échappement non structurelles (4, 5) pour un moteur, en conformité avec l'une quelconque des revendications précédentes, **caractérisée en ce qu'**elle comprend les étapes suivantes en séquence :
- la fixation de ladite console (3) au moteur ;
- la fixation de ladite borne commune (2) d'un côté auxdites tubulures (4, 5) et de l'autre à ladite console en la coulissant entre les deux ailes latérales (8, 9), de sorte que la première bride (10) soit positionnée au-dessus desdites ailes latérales ;
- la fixation dudit turbocompresseur (1) sur ladite borne commune (2), en regroupant directement ladite première et ladite seconde bride avec un joint.
